# EUROPÄISCHE PATENTANMELDUNG

(11) **EP 1 582 775 A1**
(43) Veröffentlichungstag der Anmeldung: **05.10.2005**
(21) Anmeldenummer: 04008064.0
(22) Anmeldetag: 02.04.2004
(51) Int. Cl.: F16H 57/02

(54) **Getriebegehäuse**

(71) Anmelder: Getriebebau Nord GmbH & Co. KG, 22941 Bargteheide (DE)
(72) Erfinder: Bouché, Bernhard, 22941 Bargteheide (DE); Rüddenklau, Dieter, 22941 Bargteheide (DE); Küchenmeister, Gustav Adolf, 22391 Hamburg (DE)
(74) Vertreter: Glawe, Delfs, Moll

(57) **Zusammenfassung**

Gehäuse für ein Getriebe, das eine antriebsseitige Kammer (12) für mindestens eine Getriebestufe (13, 14) sowie einstückig eine Zwischenwand (4) und eine abtriebsseitige Kammer (5) für eine ein Zahnrad (6) tragende Abtriebswelle (27) bildet, die in einer Lagerbohrung (9) in der Zwischenwand (4) und einer abtriebsseitigen Lagerbohrung (11) gelagert ist. Die abtriebsseitige Lagerbohrung (11) weist einen größeren Durchmesser als das Zahnrad (6) auf. Das abtriebsseitige Zahnrad kann daher, gegebenenfalls in Montageeinheit mit der Abtriebswelle (27) und Lagern (8, 10), durch die abtriebsseitige Lagerbohrung (11) hindurch montiert werden. Einer weiteren Montageöffnung bedarf es nicht. Die abtriebsseitige Kammer (5) ist zweckmäßigerweise hinterschnittfrei gestaltet, nämlich zum einen durch eine Fläche (19), die sich an die abtriebsseitige Lagerbohrung (11) anschließt, und zum anderen durch eine Fläche 20, die sich hinterschnittfrei an eine in der Zwischenwand (4) befindliche Lagerbohrung (16) anschließt.

## Beschreibung

Die Erfindung betrifft ein Getriebegehäuse gemäß dem Oberbegriff des Anspruchs 1, das - wie bekannt aus EP-B-686 788 - eine antriebsseitige Kammer für mindestens eine Getriebestufe sowie einstückig eine Zwischenwand und eine abtriebsseitige Kammer für eine ein Zahnrad tragende Abtriebswelle bildet, die in einer Lagerbohrung in der Zwischenwand und in einer abtriebsseitigen Lagerbohrung gelagert ist. Die einstückige Ausbildung der abtriebsseitigen Kammer hat beträchtliche Vorteile hinsichtlich der Gehäusesteifigkeit, aber wird in der bekannten Konstruktion mit schweren Nachteilen erkauft. Zu diesen Nachteilen gehört eine schräge Teilung der antriebsseitigen Kammer, die sich bis über die abtriebsseitige Kammer erstreckt, um dort Platz für die Montage des abtriebsseitigen Zahnrads zu schaffen. Im Stand der Technik wird im allgemeinen eine Konstruktion vorgezogen, bei welcher für die Montage dieses Zahnrads eine besondere Einbauöffnung vorgesehen ist, die aber den Nachteil hat, daß sie aufwendig in der Herstellung ist, die Stabilität des Gehäuses mindert und ein erhöhtes Risiko des Ölaustritts aufgrund von Undichtigkeiten bietet. Bei der Montage über Einbauöffnung kann außerdem das abtriebsseitige Zahnrad in der Regel erst innerhalb des Gehäuses auf die Welle aufgepreßt werden, was aufgrund der beengten Platzverhältnisse kompliziert ist.

Der Erfindung liegt die Aufgabe zugrunde, diese Nachteile zu vermeiden. Sie erreicht dies durch die Merkmale des Anspruchs 1 sowie vorzugsweise durch diejenigen der Unteransprüche.

Danach ist vorgesehen, daß die abtriebsseitige Lagerbohrung einen größeren Durchmesser als das zugeordnete Zahnrad aufweist und die abtriebsseitige Kammer keine weitere Montageöffnung aufweist. Das ermöglicht die sehr einfache und schnelle Montage der komplett vormontierten Abtriebseinheit durch die abtriebsseitige Lagerbohrung.

Besonders vorteilhaft ist es, wenn das mit dem abtriebsseitigen Zahnrad kämmende Ritzel in der Zwischenwand fliegend gelagert ist, so dass es keine Montagearbeiten oder Montageöffnungen in der abtriebsseitigen Kammer verlangt. Vielmehr ist die Anordnung zweckmäßigerweise so getroffen, daß die das Ritzel tragende Zwischenwelle mit dem von ihr getragenen Zwischenzahnrad als vormontierte Einheit von der Antriebsseite her in die Lagerbohrung der Zwischenwand einsetzbar ist.

Die Erfindung hat ferner den Vorteil, daß sie eine sehr rationelle Fertigung des Gehäuses ermöglicht, indem nämlich die abtriebsseitige Kammer zwischen der Zwischenwand und der jeweiligen abtriebsseitigen Wand ausschließlich von zwei Flächen begrenzt ist, von denen die eine hinterschnittfrei an die abtriebsseitige Lagerbohrung und die andere von der anderen Seite her hinterschnittfrei an die in der Zwischenwand für die Zwischenwelle vorgesehene Lagerbohrung anschließt. Auf diese Weise besteht die Möglichkeit, das Gehäuse ohne verlorenen Kern zu formen. Dadurch wird die Möglichkeit zur rationellen und genauen Herstellung im Druckgußverfahren eröffnet.

Auch die antriebsseitige Kammer sollte ausschließlich von Flächen begrenzt sein, die hinterschnittfrei an die antriebsseitige Deckelöffnung dieser Kammer anschließen.

Die Erfindung wird im folgenden näher unter Bezugnahme auf die Zeichnung erläutert, die ein vorteilhaftes Ausführungsbeispiel veranschaulicht. Es zeigen:
- Fig. 1: einen Längsschnitt durch das Gehäuse mit angeflanschtem Motor,
- Fig. 2: eine perspektivische Ansicht des Gehäuses von der Abtriebsseite und
- Fig. 3: eine entsprechende Ansicht des offenen Gehäuses von der Antriebsseite her.

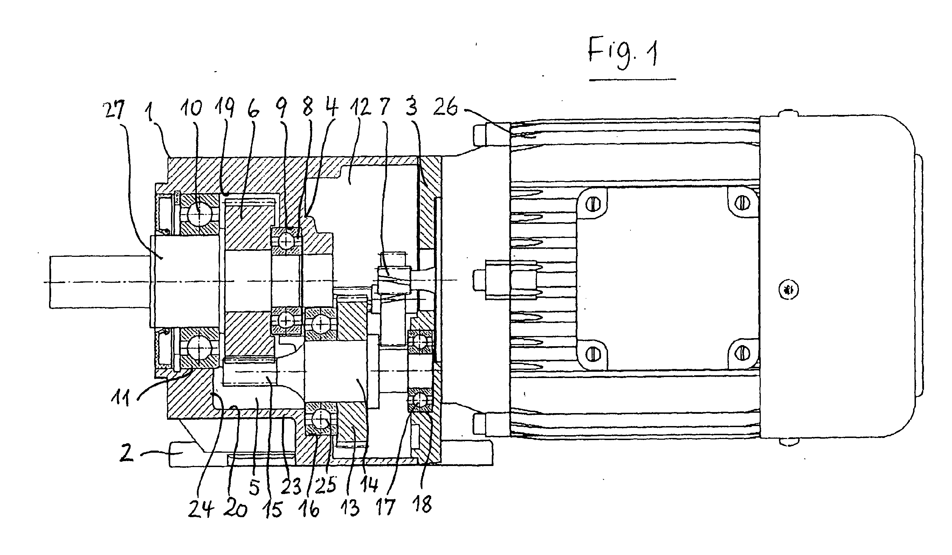

Das von links unten nach rechts oben in Fig. 1 schraffierte Getriebegehäuse 1 hat einen Fuß 2, eine Zwischenwand 4 und wird antriebsseitig von einem Deckel 3 geschlossen, an den im dargestellten Beispiel ein Motor 26 mit in das Getriebegehäuse hineinragender Ritzelwelle 7 angeflanscht ist. Abtriebsseitig von der Zwischenwand 4 ist ein Raum 5 gebildet, der das Zahnrad 6 der Abtriebswelle 27 aufnimmt, die einerseits durch ein Lager 8 in einer Lagerbohrung 9 der Zwischenwand 4 und andererseits durch ein abtriebsseitiges Lager 10 in einer Lagerbohrung 11 gelagert ist. Auf der Antriebsseite der Zwischenwand 4 befindet sich ein Raum 12, in welchem sich eine oder mehrere Getriebestufen befinden, von denen im vorliegenden Fall lediglich das Zwischenzahnrad 13 auf einer Zwischenwelle 14 interessiert, die durch ein Lager 25 in einer Lagerbohrung 16 der Zwischenwand sowie durch ein Lager 17 in einer Lagerbohrung 18 des Deckels 3 gelagert ist. Sie trägt fliegend am Ende ein Ritzel 15, das mit dem Zahnrad 6 kämmt.

Der Durchmesser der abtriebsseitigen Lagerbohrung 11 ist größer als der Durchmesser des Zahnrads 6. Demzufolge besteht die Möglichkeit, die vormontierte Einheit der Welle 27 mit dem Zahnrad 6 sowie gegebenenfalls einem oder zwei Lagern 8, 10 als Einheit von der Abtriebsseite her durch die Lagerbohrung 11 hindurch zu montieren. Ebenso besteht die Möglichkeit, die Welle 14 als Montageeinheit mit dem Zahnrad 13 und gegebenenfalls einem oder zwei Lagern 25, 17 als vormontierte Einheit von der Antriebsseite des Getriebes her bei offenem Deckel 3 zu montieren. Der Montageaufwand ist entsprechend gering. Gleichzeitig wird der Vorteil erreicht, dass das gesamte Getriebegehäuse mit Ausnahme des antriebsseitigen Deckels 3 einstückig ausgebildet ist und entsprechend steif ist.

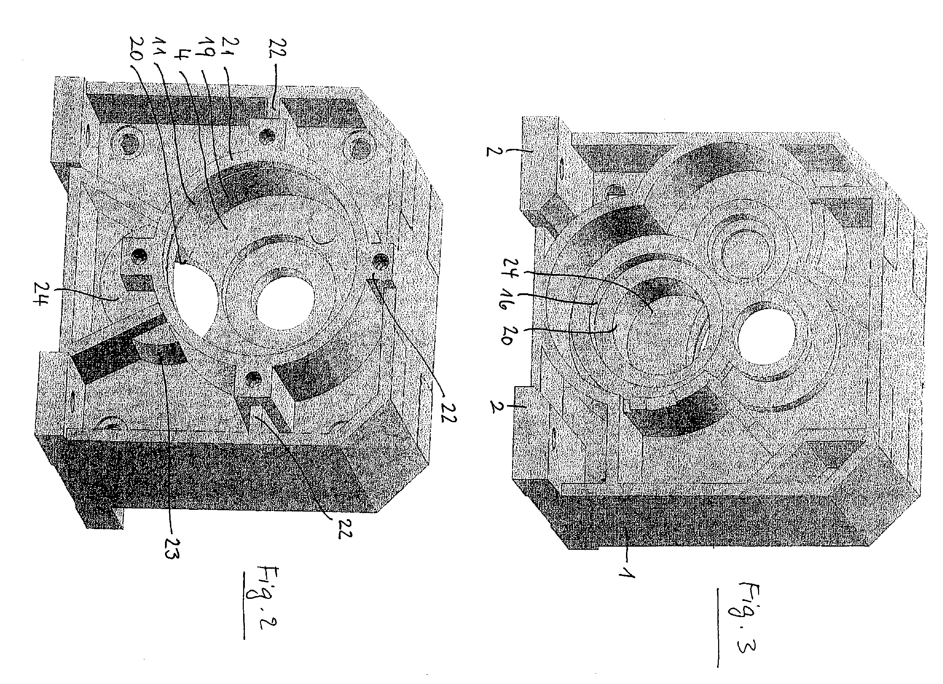

Der Raum 5, der das Zahnrad 6 enthält, wird von zwei zylindrischen Flächen 19, 20 begrenzt. Die eine Zylinderfläche 19 schließt sich hinterschnittfrei an die Lagerbohrung 11 an. Die andere Fläche 20 schließt sich von der entgegengesetzten Richtung her hinterschnittfrei an die Lagerbohrung 16 in der Zwischenwand an. Das bedeutet nicht, dass diese Flächen 19, 20 den selben Durchmesser wie die zugehörigen Lagerbohrungen 11, 16 haben müssen. Aus wirtschaftlichen Gründen wird man aber die Lagerbohrung 11 nicht wesentlich größer machen, als es der Durchmesser des Zahnrads 6 verlangt. Das läuft darauf hinaus, dass die Flächen 19 und 11 im Wesentlichen einen gleichen Durchmesser haben. Eine solche Beziehung besteht nicht zwischen den Flächen 16 und 20. Man erkennt in Fig. 3, daß sie gegeneinander abgestuft sind.

Man erkennt ferner in Fig. 2, daß der obere Teil der abtriebsseitigen Kammer 5 lediglich von einer zylindrischen Wand 21 gebildet ist, in deren Mündungsöffnung sich die Lagerbohrung 11 für das abtriebsseitige Lager 10 befindet. Sie kann der besseren Steifheit wegen durch Streben 22 mit anderen Teilen des Getriebegehäuses verbunden sein. In ähnlicher Weise kann der untere Teil der Kammer 5 von einer im wesentlichen zylindrischen Wand 23 gebildet sein, die abtriebsseitig durch einen Boden 24 abgeschlossen ist.

Die perspektivischen Darstellungen in Fig. 2 und 3 machen verständlich, daß das Gehäuse sowohl von der Abtriebsseite als auch von der Antriebsseite her ausschließlich Flächen aufweist, die hinterschnittfrei geformt sind.

## Patentansprüche

1. Gehäuse für ein mehrstufiges Getriebe, das eine antriebsseitige Kammer (12) für mindestens eine Getriebestufe (13, 14) sowie einstückig eine Zwischenwand (4) und eine abtriebsseitige Kammer (5) für eine ein Zahnrad (6) tragende Abtriebswelle (27) bildet, die in einer Lagerbohrung (9) in der Zwischenwand (4) und einer abtriebsseitigen Lagerbohrung (11) gelagert ist, **dadurch gekennzeichnet, daß** die abtriebsseitige Lagerbohrung (11) einen größeren Durchmesser als das Zahnrad (6) aufweist und die abtriebsseitige Kammer (5) keine weitere Montageöffnung aufweist.

2. Gehäuse nach Anspruch 1, **dadurch gekennzeichnet, daß** die Abtriebswelle (27) und das Zahnrad (6) mit gegebenenfalls einem oder zwei Lagern (9, 10) als vormontierte Einheit durch die abtriebsseitige Lagerbohrung (11) montierbar ist.

3. Gehäuse nach Anspruch 1 oder 2, **dadurch gekennzeichnet, daß** eine in der antriebsseitigen Kammer (12) ein Zwischenzahnrad (13) tragende und zumindest in der Zwischenwand (4) gelagerte Zwischenwelle (14) über ein fliegend angeordnetes Ritzel (15) auf das Zahnrad (6) der Abtriebswelle (27) wirkt.

4. Gehäuse nach Anspruch 3, **dadurch gekennzeichnet, daß** die Zwischenwelle (14) mit Zwischenzahnrad (13) und gegebenenfalls Lagern (25, 17) als vormontierte Einheit von der Antriebsseite her in der Lagerbohrung (16) der Zwischenwand (4) montierbar ist.

5. Gehäuse nach einem der Ansprüche 1 bis 4, **dadurch gekennzeichnet, daß** die abtriebsseitige Kammer (5) zwischen der Zwischenwand (4) und einer etwaigen abtriebsseitigen Begrenzung (24) ausschließlich von zwei Flächen (19, 29) begrenzt ist, von denen die eine hinterschnittfrei an die abtriebsseitige Lagerbohrung (11) und die andere hinterschnittfrei an die in der Zwischenwand (4) für die Zwischenwelle (14) vorgesehene Lagerbohrung (16) anschließt.

6. Gehäuse nach Anspruch 5, **dadurch gekennzeichnet, daß** die antriebsseitige Kammer (12) außer durch die Zwischenwand (4) ausschließlich von Flächen begrenzt ist, die hinterschnittfrei an eine antriebsseitige Deckelöffnung dieser Kammer (12) anschließen.
